# EUROPEAN PATENT SPECIFICATION

(11) **EP 3 641 285 B1**
(45) Date of publication and mention of the grant of the patent: **19.04.2023**
(21) Application number: 19204197.8
(22) Date of filing: 18.10.2019
(51) Int. Cl.: H04M 1/72403, H04M 1/72427, H04M 1/02

(54) **METHOD AND DEVICE FOR STARTING APPLICATION PROGRAM**
VERFAHREN UND VORRICHTUNG ZUM STARTEN EINES ANWENDUNGSPROGRAMMS
PROCÉDÉ ET DISPOSITIF DE DÉMARRAGE DE PROGRAMME D'APPLICATION

(30) Priority: 19.10.2018 CN 201811224547
(43) Date of publication of application: 22.04.2020
(73) Proprietor: Beijing Xiaomi Mobile Software Co., Ltd., Beijing 100085 (CN)
(72) Inventor: LIN, Zhaoqin, Beijing, 100085 (CN); LIU, Ming, Beijing, 100085 (CN); JIN, Fan, Beijing, 100085 (CN)
(74) Representative: Hughes, Andrea Michelle

(56) References cited:
- EP-A1- 2 523 433
- US-A1- 2010 100 839
- US-A1- 2013 016 074
- US-A1- 2016 124 698

## Description

### TECHNICAL FIELD

The present disclosure relates to the field of computer communication technology, and more particularly to a method and a device for starting an application program.

### BACKGROUND

With continuous development of software technology, a large number of game application programs are developed and used. For user convenience, other application programs may be used during the process of using a game application program. These other application programs may be software tools, such as an instant chat tool, an image snapping tool, and a video recording tool. US2010/100839A1 discloses a computer-implemented user input method including sensing a user manipulation of a mobile device to present a keyboard, automatically presenting, in response to the sensed manipulation, a search entry area on a display of the user device, and activating the keyboard to provide input into the search entry area. EP2523433A1 discloses a method for facilitating an input field of an electronic device including presenting a menu item for selection while the electronic device is in a first physical state and identifying the menu item selected when the electronic device is in the first physical state. The method includes detecting whether the electronic device is in a second physical state after selection of the menu item and presenting an input field associated with the menu item selected. US2013/016074A1 discloses an electronic device with a plurality of applications available including a display screen, a sliding portion, a detecting unit, an executing unit. The sliding portion is assembled on the electronic device and is slidable on the surface of the display screen. The detecting unit detects the position of the sliding portion on the surface of the display screen. The executing unit executes different applications according to the different positions to which the sliding portion can be moved. US2016/124698A1 discloses methods and devices for selectively presenting a user interface or "desktop" across two devices. More particularly, a unified desktop is presented across a device and a computer system that comprise a unified system. The unified desktop acts as a single user interface that presents data and receives user interaction in a seamless environment that emulates a personal computing environment.

### SUMMARY

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

The invention relates to a method for starting an application program as defined in claim 1.

[deleted]

In an example, when displaying the first target information of the first application program, the method further includes obtaining a preset functional interface of the first application program, wherein the preset functional interface includes the first target information; and displaying the preset functional interface.

[deleted]

[deleted]

[deleted]

According to yet another embodiment, the method further includes, before starting the first application program, screening out the first application program based on an application program screening mechanism.

In an example, when screening out the first application program based on the application program screening mechanism, the method includes any one of obtaining historical usage information of associated application programs running together with the target application program in a preset historical period, and designating an associated application program with the historic usage information thereof satisfying a preset usage condition as the first application program; or designating an associated application program belonging to a same developer as the target application program as the first application program.

In another example, when the first sliding information indicates that the sliding cover performed the preset sliding movement, when starting the first application program, the method further includes any one of: when a sensing signal corresponding to the first sliding information is a preset sensing signal output by a Hall sensor on the terminal, starting the first application program, wherein the preset sensing signal is a voltage signal detected by the Hall sensor when the sliding cover is pushed to a preset position; when a sensing signal corresponding to the first sliding information is a preset infrared sensing signal output by an infrared sensor on the terminal, starting the first application program, wherein the preset infrared sensing signal is an infrared sensing signal detected by the infrared sensor when a mark on the sliding cover passes by the infrared sensor; or when a sensing signal corresponding to the first sliding information is detected by a distance sensor on the terminal and it is determined that the sliding cover has performed the preset sliding movement based on the sensing signal, starting the first application program, wherein the preset movement includes a preset sliding direction and/or the sliding cover sliding to a preset position.

In yet another example, the target application program includes a game application program.

The invention also relates to a device for starting an application program as defined by claim 7.

[deleted]

It is to be understood that both the foregoing general description and the following detailed description are illustrative and explanatory only and are not restrictive of the present disclosure.

### BRIEF DESCRIPTION OF DRAWINGS

The accompanying drawings, which are incorporated in and constitute a part of this specification, illustrate aspects consistent with the disclosure and, together with the description, serve to explain the principles of the disclosure.
FIG. 1 is a flowchart illustrating a method for starting an application program according to an exemplary aspect of the present disclosure.
FIG. 2 is a flowchart illustrating another method for starting an application program according to an exemplary aspect of the present disclosure.
FIG. 3 is a flowchart illustrating another method for starting an application program according to an exemplary aspect of the present disclosure.
FIG. 4 is a flowchart illustrating another method for starting an application program according to an exemplary aspect of the present disclosure.
FIG. 5 is a flowchart illustrating another method for starting an application program according to an exemplary aspect of the present disclosure.
FIG. 6 is a flowchart illustrating another method for starting an application program according to an exemplary aspect of the present disclosure.
FIG. 7 is a flowchart illustrating another method for starting an application program according to an exemplary aspect of the present disclosure.
FIG. 8 is a block diagram illustrating a device for starting an application program according to an exemplary aspect of the present disclosure.
FIG. 9 is a block diagram illustrating another device for starting an application program according to an exemplary aspect of the present disclosure.
FIG. 10 is a block diagram illustrating another device for starting an application program according to an exemplary aspect of the present disclosure.
FIG. 11 is a block diagram illustrating another device for starting an application program according to an exemplary aspect of the present disclosure.
FIG. 12 is a block diagram illustrating another device for starting an application program according to an exemplary aspect of the present disclosure.
FIG. 13 is a block diagram illustrating another device for starting an application program according to an exemplary aspect of the present disclosure.
FIG. 14 is a block diagram illustrating another device for starting an application program according to an exemplary aspect of the present disclosure.
FIG. 15 is a block diagram illustrating another device for starting an application program according to an exemplary aspect of the present disclosure.
FIG. 16 is a schematic diagram illustrating a structure of a device for starting an application program according to an exemplary aspect of the present disclosure.
FIG. 17 is a schematic diagram illustrating a structure of another device for starting an application program according to an exemplary aspect of the present disclosure.
FIG. 18 shows a block structure of a terminal device for starting an application program according to an exemplary aspect of the present disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

### DETAILED DESCRIPTION

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of illustrative aspects do not represent all implementations consistent with the disclosure. Instead, they are merely examples of apparatuses and methods consistent with aspects related to the disclosure as recited in the appended claims.

The terms used in the present application are for the purpose describing particular aspects or embodiments, and are not intended to limit the present disclosure. The singular forms "a", "said" and "the" are intended to include plural forms unless the context clearly indicates otherwise. It should also be understood that the term "and/or" as used herein refers to and encompasses any or all possible combinations of one or more of the associated listed items.

It should be understood that although the terms first, second, third, etc. may be used to describe various information in the disclosure, such information should not be limited to these terms. These terms are only used to distinguish the same type of information from each other. For example, the first information may also be referred to as the second information without departing from the scope of the present application. Similarly, the second information may also be referred to as the first information. Depending on the context, the word "if" as used herein may be interpreted as "when" or "while" or "in response to a determination."

In the related art, a tool box with built-in tools is disposed in a target application program. The tool box may be located in a designated region of a functional interface of the target application program, or is suspension-displayed in the functional interface of the target application program through a trigger operation by a user. In the process of using the target application program, if the user desires to use a tool, the tool may be started only through multi-step user operations such as searching the tool box in the functional interface of the target application program, opening the tool box, searching the tool in the tool box and opening the tool. Therefore, the method of starting a tool has disadvantages including complicated and long-time user operations, and so on, resulting in poor user experiences.

The present disclosure provides a method of starting an application program. The method is applied to a terminal. The terminal includes a sliding cover and a device body that are slidably connected with each other. The sliding cover slides relative to the device body. The terminal may be a slide phone, a personal digital assistant with a sliding cover and a wearable device with a sliding cover, and so on.

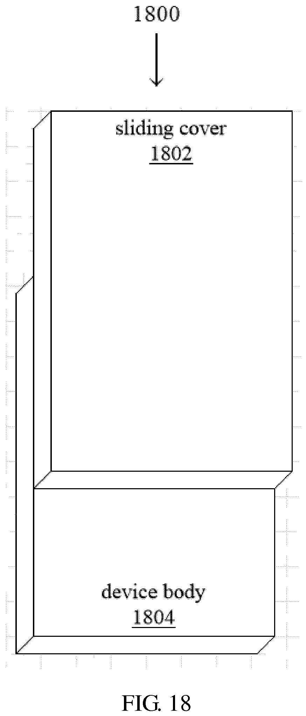

For example, FIG. 18 shows a block structure of a terminal device for starting an application program according to an exemplary aspect of the present disclosure. As shown in FIG. 18, the terminal device 1800 may include a sliding cover 1802 and a device body 1804 that are slidably connected with each other.

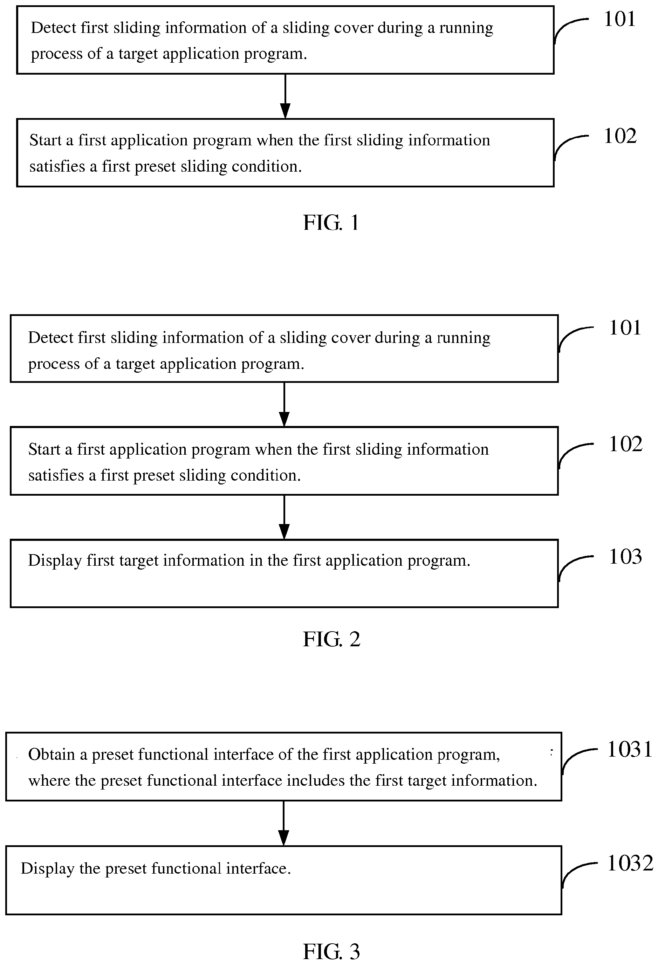

FIG. 1 is a flowchart illustrating a method for starting an application program according to an example. The method includes the following steps.

At step 101, a first sliding information of a sliding cover is detected during a running process of a target application program.

In some examples, the target application program includes a game application program.

In examples of the present disclosure, the terminal is provided with a detection element which is configured to detect whether the sliding cover slides or not. For example, the detection element may detect a movement of the sliding cover relative to the device body. The terminal also includes a functional application program running on the terminal, and the functional application program may generate sliding information according to a sensing signal detected by the detection element. The sliding information may be based on the movement (e.g., sliding movement) of the sliding cover relative to the device body. The sliding information is used to indicate a sliding condition of the sliding cover. The sliding information may be the sensing signal detected by the detection element or may also be information generated by the functional application program according to the detected sensing signal. During the running process of the target application program, the detection element performs sliding detection for the sliding cover and the terminal generates the first sliding information of the sliding cover according to the sensing signal detected by the detection element.

In some examples, there are a plurality of types of detection elements, and different types of detection elements correspond to different kinds of first sliding information. The detection element may be a Hall sensor. A sensing signal (a voltage signal) detected by the Hall sensor may be used to determine a sliding condition of the sliding cover. The sliding condition may include, for example, the sliding cover is pushed open, the sliding cover is pushed back, the sliding cover is pushed open to a top, the sliding cover is pushed back to an original position and so on. Then, the first sliding information may be a sensing signal detected by the Hall sensor, such as a sensing signal indicating that the sliding cover is pushed open, a sensing signal indicating that the sliding cover is pushed back, a sensing signal indicating that the sliding cover is pushed open to the top and a sensing signal indicating that the sliding cover is pushed back to the original position.

The detection element may be an infrared sensor. A sensing signal (an infrared signal) detected by the infrared sensor may be used to determine a sliding condition of the sliding cover. The sliding condition may include, for example, that a mark on the sliding cover passes by the infrared sensor, the sliding cover slides across a preset distance and so on. Then, the first sliding information may be a sensing signal detected by the infrared sensor, such as a sensing signal indicating that the mark on the sliding cover passes by the infrared sensor, and a sensing signal indicating that the sliding cover slides across the preset distance.

The detection element may be a distance sensor. A sensing signal detected by the distance sensor may be used to determine a distance of relative displacement between the sliding cover and the device body. A sliding direction of the sliding cover, that is, whether the sliding cover slides away from the device body or toward the device body, may be determined according to the distances of the relative displacements detected at many times . Then, the first sliding information may be information generated according to the sensing signal detected by the distance sensor, such as a distance of relative displacement between the sliding cover and the device body, a sliding direction of the sliding cover, the sliding cover sliding across a certain distance in a particular direction, and so on.

The above are merely examples of the detection element and the first sliding information, and any other detection elements and first sliding information suitable for the present disclosure may also be used.

At step 102, a first application program is started when the first sliding information satisfies a first preset sliding condition.

The first preset sliding condition is taken as a determination basis of starting the first application program to determine whether the sliding cover performs a preset sliding which may trigger the starting of the first application program when the first sliding information is detected. When the first sliding information satisfies the first preset sliding condition, it is determined that the sliding cover has performed the preset sliding, and the first application program is started immediately.

The preset sliding may include various kinds of sliding, for example, the sliding cover is pushed open, the sliding cover is pushed open to the top, the sliding cover is pushed back, the sliding cover is pushed back to the original position, the sliding cover slides in a particular direction, and the sliding cover slides across a preset distance in a particular direction, and so on. The first application program may include a plurality of programs, such as an instant chat application program, a screenshot application program, and a video recording application program and so on.

The first application program may include only one application program or may include two or more application programs. When the first application program includes two or more application programs, the two or more application programs may be started at the same time in a case that the first sliding information satisfies the first preset sliding condition, thereby realizing the simultaneous starting of the two or more application programs.

According to the method of the present disclosure, the terminal may automatically start other application programs according to the sliding operation of the sliding cover during a running process of the target application program. In this case, the multi-step user operations of starting other application programs during the running process of the target application program may be simplified, the user operations of starting other application programs may be saved, the user operation time may be shortened, and convenience and user experiences of starting other application programs during the running process of the target application program may be improved. In some examples, different types of first sliding information correspond to different first preset sliding conditions.

For example, when the detection element is a Hall sensor, since the sensing signal detected by the Hall sensor is a voltage signal, the first preset sliding condition may be that a voltage value of the sensing signal output by the Hall sensor is a preset voltage value, where the preset voltage value may be a voltage value of a sensing signal detected when the sliding cover is pushed open to a first preset position, and a voltage value of a sensing signal detected when the sliding cover is pushed back to a second preset position, and so on. In the case that the detection element is the Hall sensor, when the sensing signal of the first sliding information is a preset sensing signal corresponding to the preset voltage value, the first application program is started.

For example, when the detection element is an infrared sensor, the first preset sliding condition may be that a sensing signal detected by the infrared sensor when the mark on the sliding cover passes by the infrared sensor is a preset infrared sensing signal. In the case that the detection element is the infrared sensor, when the sensing signal of the first sliding information is the preset infrared sensing signal detected by the infrared sensor when the mark on the sliding cover passes by the infrared sensor, the first application program is started.

For example, when the detection element is a distance sensor, the first sliding information is generated according to a sensing signal output by the distance sensor. The first sliding information may be a sliding direction of the sliding cover, the sliding cover sliding across a certain distance in a particular direction, and so on. The sliding direction of the sliding cover may be determined according to a distance change trend indicated by a plurality of sensing signals detected by the distance sensor during the sliding of the sliding cover. The first preset sliding condition may be determining that the sliding cover performs a preset sliding according to the first sliding information, where the preset sliding refers to that the sliding cover slides along a preset direction and the sliding cover slides across a preset distance along the preset direction and so on. In the case that the detection element is the distance sensor, when the sliding cover is determined to perform the preset sliding according to the first sliding information, the first application program is started.

Illustratively, when the first sliding information is the sliding direction of the sliding cover, the first preset sliding condition may be that the sliding cover slides in a direction away from the device body. Then, when the detected first sliding information indicates that the sliding cover slides in the direction away from the device body, the first application program is started. When the first sliding information is that the sliding cover slides across a certain distance along a particular direction, the first preset sliding condition may be that the sliding cover slides by N centimeters in the direction away from the device body, where N is a positive integer. Then, when the detected first sliding information indicates that the sliding cover slides by N centimeters in the direction away from the device body, the first application program is started.

When the detection element is the Hall sensor or the infrared sensor, step 102 may also be summarized as: when the first sliding information indicates that the sliding cover performs the preset sliding, the first application program is started. In the case that the detection element is the Hall sensor, when the sliding cover performs the preset sliding, the sliding cover is pushed to a preset position and a voltage value of a sensing signal detected by the Hall sensor is the preset voltage value. The preset voltage value is a voltage value pre-stored in the terminal that was detected when the sliding cover is pushed to the preset position. In the case that the detection element is an infrared sensor, when the sliding cover performs the preset sliding, the mark on the sliding cover just passes by the infrared sensor and the sensing signal detected by the infrared sensor at this time is a preset infrared sensing signal. The preset infrared sensing signal is a sensing signal pre-stored in the terminal and detected when the mark on the sliding cover just passes by the infrared sensor.

FIG. 2 is a flowchart illustrating another method for starting an application program according to an example. Referring to FIG. 2, in some examples, after starting the first application program, the terminal may also perform the following step: at step 103, first target information in the first application program is displayed. By performing steps 101-103, the terminal may start the first application program and display the information of the first application program at the same time according to the sliding operation of the sliding cover during the running process of the target application program, thereby facilitating the user to view the information of the first application program.

Different types of first application programs have different first target information. For example, for an instant chat application program, the first target information may be a chat content between friends; for a short message application program, the first target information may be a content of a short message.

In some examples, for the above step 103, only the first target information may be extracted from the first application program, or referring to FIG. 3 illustrating a flowchart of another method for starting an application program according to an example, step 103 may be implemented in the following manner: at step 1031, a preset functional interface of the first application program is obtained, where the preset functional interface includes the first target information; at step 1032, the preset functional interface is displayed.

For example, when the first application program is an instant chat application program, the first target information is the chat information, and the preset functional interface may be a chat window interface. Then, the terminal obtains and displays the chat window interface between the user and a friend. Alternatively, the preset functional interface may be a main interface of an instant chat application program, and a functional application program may obtain and display the main interface for the user to search a friend and send a message to the friend.

Besides the first target information, the preset functional interface is also provided with other information and some functional components. The functional application program displays the preset functional interface so that the user may easily view different types of information and use the functional components. Further, the operation of extracting the first target information from the preset functional interface by the functional application program may be saved by obtaining the preset functional interface. Thus, program operations may be simplified and information obtaining efficiency may be improved.

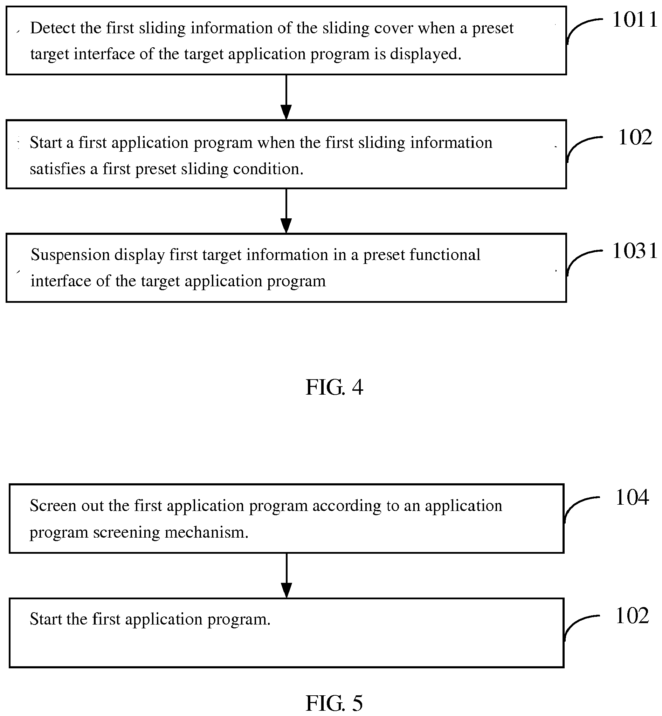

FIG. 4 is a flowchart illustrating another method for starting an application program according to an example. In some examples, the above step 101 may be implemented in the following manner: at step 1011, the first sliding information of the sliding cover is detected when a preset target interface of the target application program is displayed. In some examples, when the target application program is a game application program, the preset target interface is a preset game interface. At step 1011, the execution timing for detecting the first sliding information is defined, that is, the detection is performed only when the terminal displays the preset target interface of the target application program while the detection is not performed when the terminal does not display the preset target interface. The preset target interface may be the main interface or a sub-interface of the target application program.

By referring to FIG. 4, based on the performing process of the step 1011, the above step 103 may be implemented in the following manner: at step 1031, the first target information is suspension displayed in the preset target interface of the target application program.

By performing steps 1011 and 1031 and other steps, the following purpose is realized: when the terminal displays the preset target interface of the target application program, the user may control the terminal to display information of another application program on the preset target interface of the target application program simply by sliding the sliding cover without performing a user operation of exiting the preset target interface of the target application program or other operations. Thus facilitating the user to view the information of other application programs at the same time when using the target application program, for example, playing a game.

After starting the first application program, the terminal may obtain the preset functional interface of the first application program. The preset functional interface includes the first target information. Then, step 1031 may be implemented in the following manner: the preset functional interface is suspension displayed in the preset target interface of the target application program. Specifically, a suspension window may be popped up in the preset target interface of the target application program and the first target information or the preset functional interface of the first application program may be displayed in the suspension window.

In some examples, the terminal determines the first application program before starting the first application program. FIG. 5 is a flowchart illustrating another method for starting an application program according to an example. The terminal may determine the first application program in the following manner: at step 104, the first application program is screened out according to an application program screening mechanism. The terminal automatically screens out the first application program by performing step 104, thereby enriching functions of the terminal.

The above step 104 may be implemented by any of the following operations.

In the first operation, historic usage information of associated application programs running together with the target application program at the same time in a preset historic period is obtained, and the associated application program whose historic usage information satisfying a preset usage condition is taken as a target first application program. The associated application program is an application program other than the target application program and may run together with the target application program at the same time. The historic usage information may include historic usage time, historic usage frequency and so on. Correspondingly, the preset usage condition may be that the application program has a maximum usage time, a maximum usage frequency and so on.

In the second operation, unassociated application program belonging to a same developer as the target application program is taken as the first application program. Since the associated application program and the target application program belong to the same developer, an association exists between the associated application program and the target application program. The associated application program belonging to the same developer is taken as the first application program and started, which facilitates use and promotion of a plurality of application programs belonging to the same developer.

In some examples, after starting the first application program according to the first sliding information of the sliding cover, the functional application program continues to control the detection element to detect the sliding cover. When the sliding cover performs another preset sliding, the first application program is exited, that is, the running of the first application program is stopped. In this way, the terminal may directly start the application program and exit the application program according to the sliding of the sliding cover, thereby saving associated operations of the user and improving the intelligence of the terminal and the user experiences.

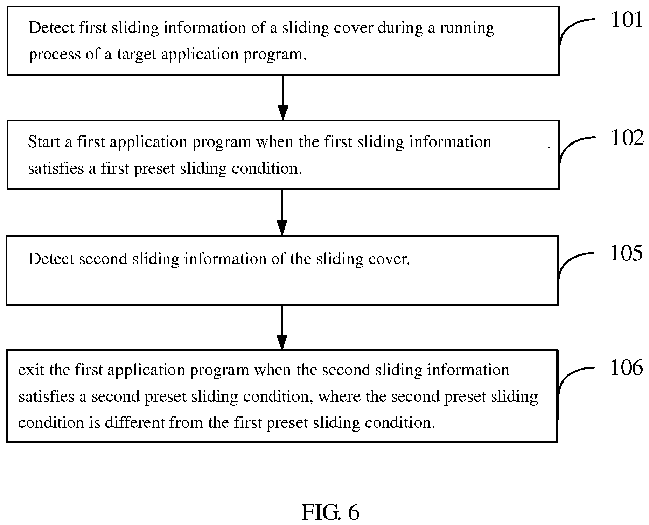

FIG. 6 is a flowchart illustrating another method for starting an application program according to an example. The above process of the example may be implemented in the following manner: at step 105, second sliding information of the sliding cover is detected; at step 106, the first application program is exited when the second sliding information satisfies a second preset sliding condition, where the second preset sliding condition is different from the first preset sliding condition.

For the above step 105, the second sliding information may also be a sensing signal detected by the detection element or information generated according to the detected sensing signal, such as a sensing signal detected by the Hall sensor, a sensing signal detected by the infrared sensor, and information generated according to a sensing signal detected by the distance sensor.

For the above step 106, the second preset sliding condition is similar to the first preset sliding condition, but the second preset sliding condition is different from the first preset sliding condition. For example, the first preset sliding condition is that: a sensing signal output by the Hall sensor is a first sensing signal, where the first sensing signal is detected when the sliding cover is pushed open to the top. The second preset sliding condition is that: a sensing signal detected by the Hall sensor is a second sensing signal where the second sensing signal is detected when the sliding cover is pushed back to the original position.

Through steps 105 and 106, the terminal exits the first application program according to the sliding of the sliding cover, thus improving the convenience of exiting the application program, saving the associated operations of the user and improving the intelligence of the terminal and the user experiences.

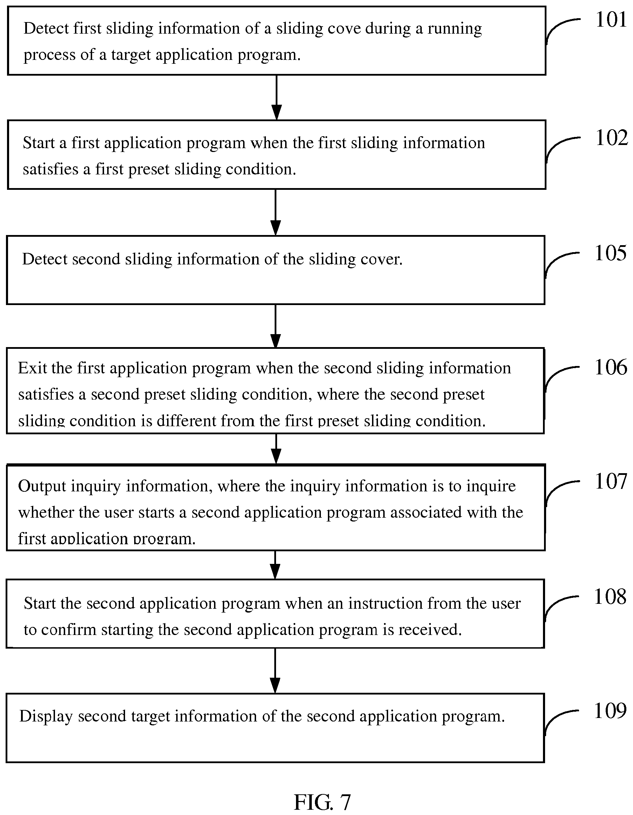

FIG. 7 is a flowchart illustrating a method of starting an application program according to the claimed invention. According to the invention as claimed, the functional application program performs the following operations after controlling the first application program to exit: at step 107, inquiry information is output, where the inquiry information is to inquire whether the user start a second application program associated with the first application program; at step 108, when an instruction from the user to confirm starting the second application program is received, the second application program is started.

For the above step 107, the first application program and the second application program are associated application programs, and after the use of the first application program, the second application program is usually used to perform subsequent operations.

The association relationship of the first application program and the second application program may be determined in several manners. For example, in the first manner, the association relationship is established manually and is a fixed association relationship. The association relationship may be established by a software developer and the software developer directly edits the association relationship into the functional application program when writing the functional application program. The association relationship may also be established by a user using the terminal and the user may input the association relationship into a designated configuration interface. Alternatively, the user may input a program identifier of the second application program, so that the terminal may establish the association relationship according to the program identifier input by the user.

In the second manner, the association relationship is established by the terminal through machine learning. According to the invention as claimed, the terminal performs statistics on the historic usage information of each application program used immediately following the exit of the first application program when the preset target interface of the target application program is displayed in a historic period, and takes an application program with the historic usage information satisfying a preset usage condition as the second application program. The historic usage information may include usage time, usage frequency and so on. The preset usage condition may be a maximum usage time, a maximum usage frequency and so on.

Because the historic usage information of each application program may be changed during the use of the terminal, the second application program determined through machine learning may be changed, and thus the association relationship may also be changed. Therefore, the association relationship is a dynamic association relationship.

After controlling the first application program to exit, the functional application program outputs the inquiry information, where the inquiry information is used to inquire whether the user starts the second application program. The inquiry information may be output in several manners, for example, the inquiry information may be suspension displayed on a display screen in the form of text or output by an audio player in the form of voice, and so on.

For the above step 108, after the functional application program outputs the inquiry information, when the user confirms to start the second application program according to the inquiry information and performs a preset operation, the terminal receives the preset operation, which is equivalent to that the terminal receives the instruction from the user for starting the second application program, and then the second application program is started. The preset operation may be a selection operation of a designated option in a display interface, a pressing operation of a designated button and a voice input operation and so on.

Through steps 107 and 108, the terminal outputs the inquiry information on whether to start the second application program after exiting the first application program, and directly starts the second application program according to the instruction from the user confirming starting the second application program, thus improving the convenience of starting the second application program and improving the intelligence of the terminal and the user experiences.

As shown in FIG. 7, after starting the second application program, the terminal also performs the following processes: at step 109, second target information of the second application program is displayed. Through step 109, the terminal displays the second target information of the second application program, further enriching the terminal functions.

The present disclosure further provides a functional application program. The functional application program is to perform the method for starting an application program according to the examples in the above disclosure. The functional application program may be integrated into the target application program installed in the terminal and may also be configured independently relative to the target application program.

For convenience of descriptions, the different examples of the above method are all expressed as a series of action combinations. However, the persons skilled in the art should know that the present disclosure is not limited to the described action sequence because some steps may be performed in other sequences or simultaneously according to the present disclosure.

Secondly, the persons skilled in the art should also know that the examples described in the specification that do not fall under the scope of protection of the invention as claimed, are all optional examples, and the actions or modules involved herein are not necessarily required in the present disclosure.

Corresponding to the examples of the method of implementing the above application functions, the present disclosure further provides a device for implementing the application functions and an example of a corresponding terminal.

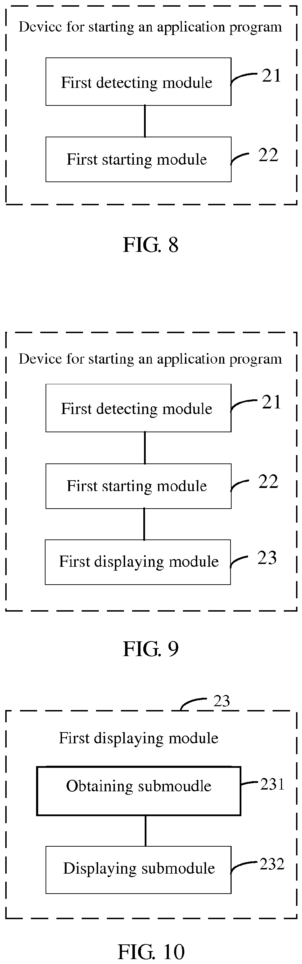

FIG. 8 is a block diagram illustrating a device for starting an application program according to an example. The device may be applied to a terminal. The terminal includes a sliding cover and a device body which are slidably connected. The device includes:
a first detecting module 21, configured to detect a first sliding information of the sliding cover during a running process of a target application program; and
a first starting module 22, configured to start a first application program when the first sliding information satisfies a first preset sliding condition.

FIG. 9 is a block diagram illustrating another device for starting an application program according to an example. Based on the example of the device shown in FIG. 8, the device further includes:
a first displaying module 23, configured to display first target information in the first application program.

FIG. 10 is a block diagram illustrating another device for starting an application program according to an example. Based on the example of the device shown in FIG. 9, the first displaying module 23 includes:
an obtaining submodule 231, configured to obtain a preset functional interface of the first application program, where the preset functional interface includes the first target information; and
a displaying submodule 232, configured to display the preset functional interface.

Optionally, the first detecting module 21 is configured to detect the first sliding information of the sliding cover when a preset target interface of the target application program is displayed.

The first displaying module 23 is configured to suspension display the first target information in the preset target interface of the target application program.

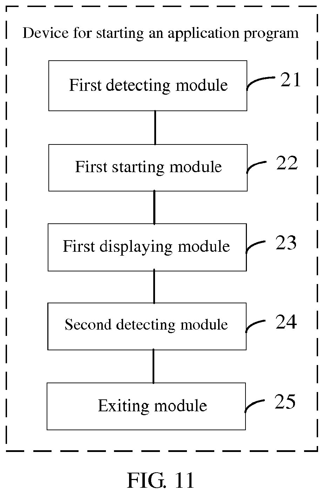

FIG. 11 is a block diagram illustrating another device for starting an application program according to an example. Based on the example of the device shown in FIG. 8, the device further includes: a second detecting moudle 24, configured to detect second sliding information of the sliding cover; and an exiting module 25, configured to exit the first application program when the second sliding information satisfies a second preset sliding condition, where the second preset sliding condition is different from the first preset sliding condition.

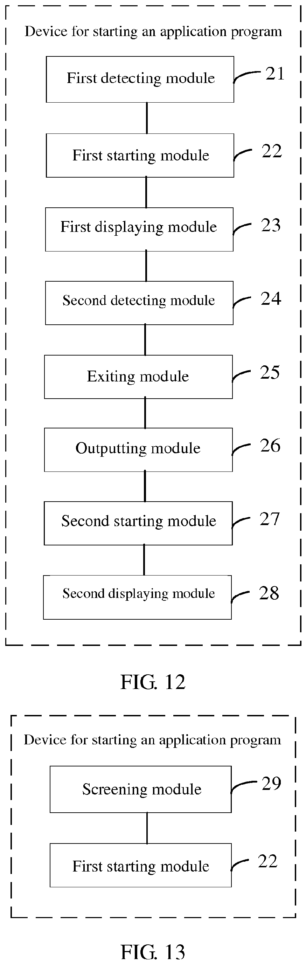

FIG. 12 is a block diagram illustrating another device for starting an application program according to the invention as claimed. Based on the example of the device shown in FIG. 11, the device further includes: an outputting module 26, configured to output inquiry information after the first application program is exited, where the inquiry information is to inquire whether a user starts a second application program and the second application program is associated with the first application program; a second starting module 27, configured to start the second application program when an instruction from the user to confirm starting the second application program is received; and a second displaying module 28, configured to display second target information in the second application program.

FIG. 13 is a block diagram illustrating another device for starting an application program according to an example of the present disclosure. Based on the example of the device shown in FIG. 8, the device further includes: a screening module 29, configured to screen out the first application program according to an application program screening mechanism.

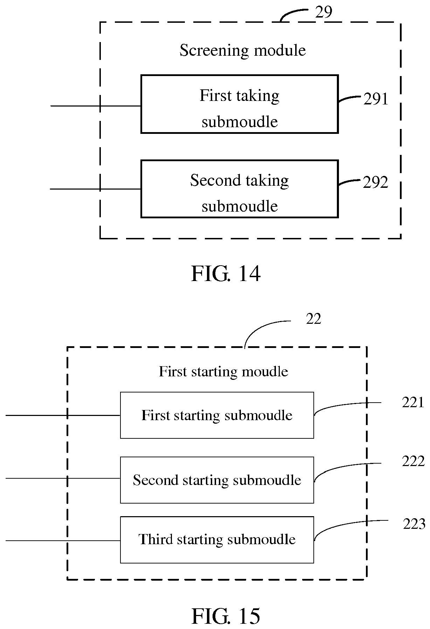

FIG. 14 is a block diagram illustrating another device for starting an application program according to an example of the present disclosure. Based on the example of the device shown in FIG. 13, the screening module 29 includes any one of:
a first taking submodule 291, configured to obtain historic usage information of associated application programs in a preset historic period and take (e.g., designate) the associated application program with the historic usage information satisfying a preset usage condition as the first application program, where the associated application program and the target application program are run at the same time in the preset historic period; and
a second taking submodule 292, configured to take (e.g., designate) an associated application program belonging to a same developer as the target application program as the first application program.

FIG. 15 is a block diagram illustrating another device for starting an application program according to an example of the present disclosure. Based on the example of the device shown in FIG. 8, the first starting module 22 includes any one of:
a first starting submodule 221, configured to start the first application program when the first sliding information is a first sensing signal output by a Hall sensor on the terminal;
a second starting submodule 222, configured to start the first application program when the first sliding information is a second sensing signal output by an infrared sensor on the terminal; and
a third starting submodule 223, configured to start the first application program when the first sliding information generated according to a third sensing signal output by a distance sensor is information for determining that the sliding cover performs a preset sliding.

Since the device examples substantially correspond to the method examples, a reference may be made to part of the descriptions of the method examples for the related part. The device examples described above are merely illustrative, where a unit described as separate members may be or not be physically separated, and the members displayed as a unit may be or not be a physical unit, i.e., may be located in one place, or may be distributed to a plurality of network units. Part or all of the modules of the device may be selected according to actual requirements to achieve the objectives of the solutions in the examples. Those of ordinary skill in the art may understand and carry out them without creative work.

Correspondingly, the present disclosure provides a device for stating an application program, including: a processor, a memory for storing instructions executable by the processor. The above processor is configured to: detect the first sliding information of the sliding cover during a running process of a target application program; and start a first application program when the first sliding information satisfies a first preset sliding condition.

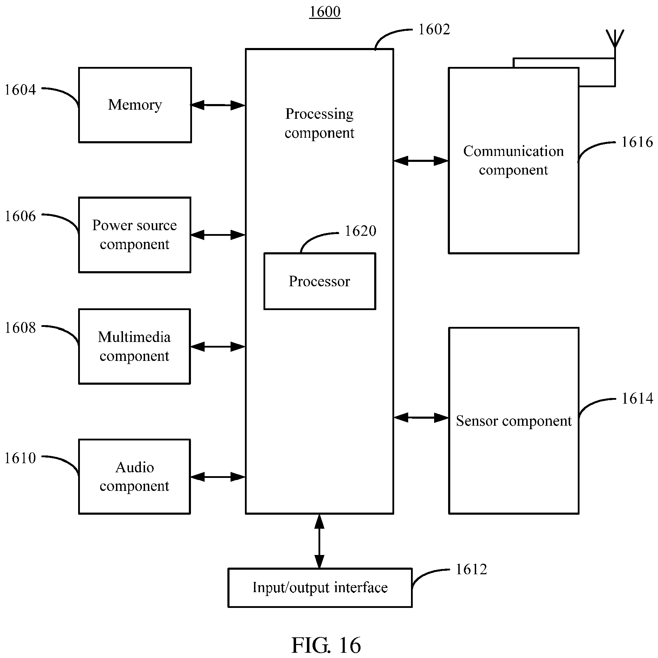

FIG. 16 is a schematic diagram illustrating a structure of a device 1600 for starting an application program according to an example. For example, the device 1600 may be a user device, and may specifically be a mobile phone, a computer, a digital broadcast terminal, a message transceiver, a game console, a tablet device, a medical device, a fitness device, a personal digital assistant, and a wearable device such as a smart watch, smart glasses, a smart wristband, smart running shoes and so on.

As shown in Fig. 16, the device 1600 may include one or more of the following components: a processing component 1602, a memory 1604, a power supply component 1606, a multimedia component 1608, an audio component 1610, an input/output (I/O) interface 1612, a sensor component 1614 and a communication component 1616.

The processing component 1602 generally controls the overall operation of the device 1600, such as operations associated with display, phone call, data communication, camera operation, and recording operation. The processing component 1602 may include one or more processors 1620 to execute instructions for completing all or part of the steps of the above methods. In addition, the processing component 1602 may include one or more modules to facilitate the interaction between the processing component 1602 and other components. For example, the processing component 1602 may include a multimedia module to facilitate the interaction between the multimedia component 1608 and the processing component 1602.

The memory 1604 is configured to store different types of data to support operation at the device 1600. Examples of such data include instructions for any application or method that operates on the device 1600, contact data, phonebook data, messages, pictures, videos, and so on. The memory 1604 may be implemented by any type of volatile or non-volatile memory devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a disk or a CD.

The power supply component 1606 may provide power for different components of the device 1600. The power supply component 1606 may include a power supply management system, one or more power sources, and other components associated with generating, managing and distributing power for the device 1600.

The multimedia component 1608 includes a screen providing an output interface between the device 1600 and a user. In some examples, the screen may include a Liquid Crystal Display (LCD) and/or a Touch Panel (TP). If the screen includes a touch panel, the screen may be implemented as a touch screen to receive an input signal from a user. The touch panel includes one or more touch sensors to sense touch, slip, and gestures on the touch panel. The touch sensor may not only sense the boundary of a touch or slip operation but also detect duration and pressure relating to the touch or slip operation. In some examples, the multimedia component 1608 may include a front-facing camera and/or a rear camera. When the device 1600 is in an operating mode, such as in a shooting mode or a video mode, the front-facing camera and/or the rear camera may receive external multimedia data. Each of the front-facing camera and the rear camera may be a fixed optical lens system or may be capable of focal length and optical zoom.

The audio component 1610 is configured to output and/or input an audio signal. For example, the audio component 1610 includes a microphone (MIC). When the device 1600 is in an operating mode, for example, in a call mode, a recording mode or a speech recognition mode, the microphone is configured to receive an external audio signal. The received audio signal may be further stored in the memory 1604 or sent via the communication component 1616. In some examples, the audio component 1610 also includes a speaker for outputting an audio signal.

The I/O interface 1612 provides an interface between the processing component 1602 and a peripheral interface module. The peripheral interface module may be a keyboard, click wheel, a button and the like. Such buttons may include but not limited to: a home button, a volume button, a start button, and a lock button.

The sensor component 1614 includes one or more sensors for evaluating states of the device 1600 in different aspects. For example, the sensor component 1614 may detect the on/off state of the device 1600, and relative locations of components, for example, the component is a display and a keypad of the device 1600.The sensor component 1614 may also detect a position change of the device 1600 or one component of the device 1600, the presence or absence of contact of a user with the device 1600, an orientation or acceleration/deceleration of the device 1600 and a temperature change of the device 1600. The sensor component 1614 may include a proximity sensor configured to detect presence of a nearby object without any physical contact. The sensor component 1614 may also include an optical sensor, such as a CMOS or CCD image sensor to be used in imaging application. In some examples, the sensor component 1614 may also include an acceleration sensor, a gyroscope sensor, a magnetic sensor, a pressure sensor, or a temperature sensor.

The communication component 1616 is configured to facilitate wired or wireless communication between the device 1600 and other devices. The device 1600 may access a wireless network based on a communication standard, such as WIFI, 2G or 3G, or a combination thereof. In some examples, the communication component 1616 may receive a broadcast signal or broadcast-related information from an external broadcast management system via a broadcast channel. In some examples, the communication component 1616 may also include a Near Field Communication (NFC) module to facilitate short-range communications. For example, the NFC module may be implemented based on RF Identification (RFID) technology, Infrared Data Association (IrDA) technology, Ultra Wide Band (UWB) technology, Bluetooth (BT) technology and other technology.

In some examples, the device 1600 may be implemented by one or more of an Application-Specific Integrated Circuit (ASIC), a Digital Signal Processor (DSP), a Digital Signal Processing Device (DSPD), a Programmable Logical Device (PLD), a Field Programmable Gate Array (FPGA), a controller, a microcontroller, a microprocessor or other electronic elements for performing the above methods.

In an example, there is provided a non-transitory computer-readable storage medium, for example, a memory 1604 storing instructions. When the instructions on the storage medium are executed by a processor 1620 of the device 1600, the device 1600 is caused to perform the method for starting an application program. The method includes: detecting a first sliding information of a sliding cover during a running process of a target application program; and starting a first application program when the first sliding information satisfies a first preset sliding condition.

The non-transitory computer readable storage medium may be a Read-Only Memory (ROM), a Random Access Memory (RAM), CD-ROM, a magnetic tape, a floppy disk, and an optical data storage device and so on.

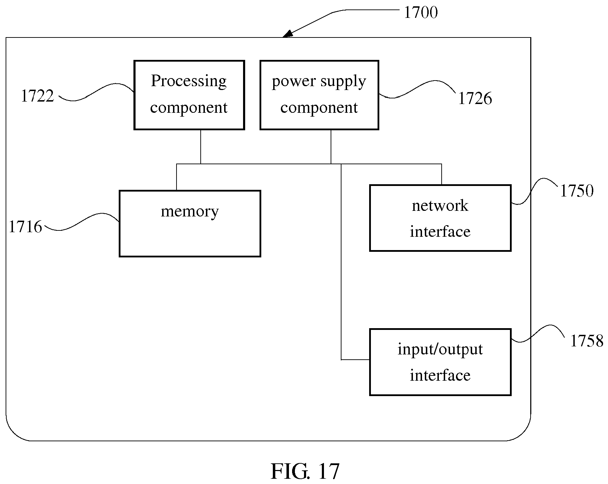

FIG. 17 is a schematic diagram illustrating a structure of another device 1700 for starting an application program according to an example. For example, the device 1700 may be provided as an application server. As shown in FIG. 17, the device 1700 may include a processing component 1722 which further includes one or more processors, and memory resources represented by a memory 1716 for storing instructions, for example, application programs, executable by the processing component 1722. The application program stored on the memory 1716 may include one or more modules corresponding to one group of instructions respectively. Further, the processing component 1722 is configured to execute the instructions to perform the above method.

The device 1700 may also include a power supply component 1726 configured to perform power management for the device 1700, a wired or wireless network interface 1750 configured to connect the device 1700 to a network and an input/output (I/O) interface 1758. The device 1700 may operate an operating system stored on the memory 1716, such as Android, iOS, Windows Server^{™}, Mac OS X^{™}, Unix^{™}, Linux^{™}, FreeBSD^{™} or a similar system.

In some examples, there is provided a non-transitory computer-readable storage medium storing instructions, for example, a memory 1716 storing instructions. The instructions may be executed by the processing component 1722 of the device 1700 to implement the above method. For example, the non-transitory computer readable storage medium may be a Read-Only Memory (ROM), a Random Access Memory (RAM), CD-ROM, a magnetic tape, a floppy disk, and an optical data storage device and so on.

When the instructions on the memory 1716 are executed by the processing component 1722, the device 1700 is caused to perform a method for starting an application program, including: detecting a first sliding information of a sliding cover during a running process of a target application program; and starting a first application program when the first sliding information satisfies a first preset sliding condition.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

It will be appreciated that the present disclosure is not limited to the exact construction that has been described above and illustrated in the accompanying drawings, and that various modifications and changes can be made as long as the resulting subject-matter falls under the scope of protection defined by the appended claims.

## Claims

1. A method for starting an application program, the method being executed by a terminal comprising a sliding cover (1802) and a device body (1804) slidably connected with each other, the method comprising the following steps:
during a running process of a target application program, detecting a first movement of the sliding cover (1802) relative to the device body (1804);
obtaining a first sliding information of the sliding cover (1802) based on the first movement when a preset target interface of the target application program is displayed;
starting a first application program when the first sliding information indicates that the sliding cover (1802) performs a preset sliding movement;
displaying a first target information of the first application program in a suspension window which is popped up in the preset target interface of the target application program;
detecting a second movement of the sliding cover (1802) relative to the device body (1804);
obtaining a second sliding information of the sliding cover (1802) based on the second movement;
exiting the first application program when the second sliding information indicates that the sliding cover (1802) performs a sliding movement different from the preset sliding movement;
after exiting the first application program, outputting an inquiry information, wherein the inquiry information is to inquire whether a user starts a second application program, and the second application program is associated with the first application program, and wherein the terminal performs statistics on historic usage information of each application program used immediately following the exit of the first application program when the preset target interface of the target application program is displayed in a historic period, and takes an application program with the historic usage information satisfying a preset usage condition as the second application program;
starting the second application program when an instruction from the user to confirm starting the second application program is received; and
displaying a second target information of the second application program.

2. The method according to claim 1, wherein displaying the first target information of the first application program comprises:
obtaining a preset functional interface of the first application program, wherein the preset functional interface comprises the first target information; and
displaying the preset functional interface.

3. The method according to any preceding claim, further comprising:
before starting the first application program, screening out the first application program based on an application program screening mechanism.

4. The method according to claim 3, wherein screening out the first application program based on the application program screening mechanism comprises any one of:
obtaining historical usage information of associated application programs running together with the target application program in a preset historical period, and designating an associated application program with the historic usage information thereof satisfying a preset usage condition as the first application program; or
designating an associated application program belonging to a same developer as the target application program as the first application program.

5. The method according to any preceding claim, wherein starting the first application program when the first sliding information indicates that the sliding cover (1802) performs the preset sliding movement, comprises any one of:
when a sensing signal corresponding to the first sliding information is a preset sensing signal output by a Hall sensor on the terminal, starting the first application program, wherein the preset sensing signal is a voltage signal detected by the Hall sensor when the sliding cover (1802) is pushed to a preset position;
when a sensing signal corresponding to the first sliding information is a preset infrared sensing signal output by an infrared sensor on the terminal, starting the first application program, wherein the preset infrared sensing signal is an infrared sensing signal detected by the infrared sensor when a mark on the sliding cover (1802) passes by the infrared sensor; or
when a sensing signal corresponding to the first sliding information is detected by a distance sensor on the terminal and it is determined that the sliding cover (1802) has performed the preset sliding movement based on the sensing signal, starting the first application program, wherein the preset sliding movement comprises a preset sliding direction and/or the sliding cover (1802) sliding to a preset position.

6. The method according to any preceding claim, wherein the target application program comprises a game application program.

7. A device for starting an application program, the device being applied to a terminal comprising a sliding cover (1802) and a device body (1804) slidably connected with each other, and the device comprising:
a first detecting module (21), configured to: during a running process of a target application program, detect a first movement of the sliding cover (1802) relative to the device body (1804), and obtain a first sliding information of the sliding cover (1802) based on the first movement when a preset target interface of the target application program is displayed;
a first starting module (22), configured to start a first application program when the first sliding information indicates that the sliding cover (1802) performs a preset sliding movement;
a first displaying module (23), configured to display a first target information of the first application program in a suspension window which is popped up in the preset target interface of the target application program;
a second detecting module (24), configured to detect a second movement of the sliding cover (1802) relative to the device body (1804), and obtain a second sliding information of the sliding cover (1802) based on the second movement;
an exiting module (25), configured to exit the first application program when the second sliding information indicates that the sliding cover (1802) performs a sliding movement different from the preset sliding movement;
an outputting module (26), configured to output an inquiry information after the first application program is exited, wherein the inquiry information is to inquire whether a user starts a second application program, and the second application program is associated with the first application program, and wherein the terminal performs statistics on historic usage information of each application program used immediately following the exit of the first application program when the preset target interface of the target application program is displayed in a historic period, and takes an application program with the historic usage information satisfying a preset usage condition as the second application program;
a second starting module (27), configured to start the second application program when an instruction from the user to confirm starting the second application program is received; and
a second displaying module (28), configured to display a second target information of the second application program.

8. The device according to claim 7, wherein the first displaying module comprises:
an obtaining submodule (231), configured to obtain a preset functional interface of the first application program, wherein the preset functional interface comprises the first target information; and
a displaying submodule (232), configured to display the preset functional interface.

9. The device according to claim 7 or 8, wherein the target application program comprises a game application program.

## Patentansprüche

1. Verfahren zum Starten eines Anwendungsprogramms, wobei das Verfahren von einem Endgerät ausgeführt wird, das eine Schiebeabdeckung (1802) und einen Vorrichtungskörper (1804) umfasst, die verschiebbar miteinander verbunden sind, wobei das Verfahren die folgenden Schritte umfasst:
während eines laufenden Prozesses eines Zielanwendungsprogramms, Erkennen einer ersten Bewegung der Schiebeabdeckung (1802) relativ zum Vorrichtungskörper (1804);
Erhalten einer ersten Schiebeinformation der Schiebeabdeckung (1802) auf Basis der ersten Bewegung, wenn eine voreingestellte Zielschnittstelle des Zielanwendungsprogramms angezeigt wird;
Starten eines ersten Anwendungsprogramms, wenn die erste Schiebeinformation darauf hinweist, dass die Schiebeabdeckung (1802) eine voreingestellte Schiebebewegung durchführt;
Anzeigen einer ersten Zielinformation des ersten Anwendungsprogramms in einem Suspendierungsfenster, das in der voreingestellten Zielschnittstelle des Zielanwendungsprogramms eingeblendet wird;
Erkennen einer zweiten Bewegung der Schiebeabdeckung (1802) relativ zum Vorrichtungskörper (1804);
Erhalten einer zweiten Schiebeinformation der Schiebeabdeckung (1802) auf Basis der zweiten Bewegung;
Beenden des ersten Anwendungsprogramms, wenn die zweite Schiebeinformation darauf hinweist, dass die Schiebeabdeckung (1802) eine Schiebebewegung durchführt, die sich von der voreingestellten Schiebebewegung unterscheidet;
nach dem Beenden des ersten Anwendungsprogramms, Ausgeben einer Abfrageinformation, wobei die Abfrageinformation dazu dient, abzufragen, ob ein Benutzer ein zweites Anwendungsprogramm startet, und das zweite Anwendungsprogramm mit dem ersten Anwendungsprogramm verknüpft ist, und wobei das Endgerät Statistiken über historische Verwendungsinformationen jedes Anwendungsprogramms, das unmittelbar nach dem Beenden des ersten Anwendungsprogramms verwendet wird, durchführt, wenn die voreingestellte Zielschnittstelle des Zielanwendungsprogramms in einem historischen Zeitraum angezeigt wird, und ein Anwendungsprogramm mit den historischen Verwendungsinformationen, die eine voreingestellte Verwendungsbedingung erfüllen, als zweites Anwendungsprogramm nimmt;
Starten des zweiten Anwendungsprogramms, wenn vom Benutzer eine Anweisung empfangen wird, um das Starten des zweiten Anwendungsprogramms zu bestätigen; und
Anzeigen einer zweiten Zielinformation des zweiten Anwendungsprogramms.

2. Verfahren nach Anspruch 1, wobei das Anzeigen der ersten Zielinformation des ersten Anwendungsprogramms umfasst:
Erhalten einer voreingestellten funktionalen Schnittstelle des ersten Anwendungsprogramms, wobei die voreingestellte funktionale Schnittstelle die erste Zielinformation umfasst; und
Anzeigen der voreingestellten funktionalen Schnittstelle.

3. Verfahren nach einem vorstehenden Anspruch, das weiter umfasst:
vor dem Starten des ersten Anwendungsprogramms, Aussieben des ersten Anwendungsprogramms auf Basis eines Anwendungsprogramm-Siebemechanismus.

4. Verfahren nach Anspruch 3, wobei das Aussieben des ersten Anwendungsprogramms auf Basis des Anwendungsprogramm-Siebemechanismus eines umfasst aus:
Erhalten historischer Verwendungsinformationen von verknüpften Anwendungsprogrammen, die in einem voreingestellten historischen Zeitraum zusammen mit dem Zielanwendungsprogramm laufen, und Benennen eines verknüpften Anwendungsprogramms, dessen historische Verwendungsinformationen eine voreingestellte Verwendungsbedingung erfüllen, als erstes Anwendungsprogramm; oder
Benennen eines verknüpften Anwendungsprogramms, das zu einem gleichen Entwickler gehört wie das Zielanwendungsprogramm, als erstes Anwendungsprogramm.

5. Verfahren nach einem vorstehenden Anspruch, wobei das Starten des ersten Anwendungsprogramms, wenn die erste Schiebeinformation darauf hinweist, dass die Schiebeabdeckung (1802) die voreingestellte Schiebebewegung durchführt, eines umfasst aus:
Starten des ersten Anwendungsprogramms, wenn es sich bei einem Erfassungssignal, das der ersten Schiebeinformation entspricht, um ein voreingestelltes Erfassungssignal handelt, das von einem Hall-Sensor am Endgerät ausgegeben wird, wobei es sich bei dem voreingestellten Erfassungssignal um ein Spannungssignal handelt, das von dem Hall-Sensor erkannt wird, wenn die Schiebeabdeckung (1802) in eine voreingestellte Position gedrückt wird;
Starten des ersten Anwendungsprogramms, wenn es sich bei einem Erfassungssignal, das der ersten Schiebeinformation entspricht, um ein voreingestelltes Infrarot-Erfassungssignal handelt, das von einem Infrarotsensor am Endgerät ausgegeben wird, wobei es sich bei dem voreingestellten Infrarot-Erfassungssignal um ein Infrarot-Erfassungssignal handelt, das von dem Infrarotsensor erkannt wird, wenn eine Markierung an der Schiebeabdeckung (1802) den Infrarotsensor passiert; oder
Starten des ersten Anwendungsprogramms, wenn ein Erfassungssignal, das der ersten Schiebeinformation entspricht, von einem Abstandssensor am Endgerät erkannt wird und auf Basis des Erfassungssignals bestimmt wird, dass die Schiebeabdeckung (1802) die voreingestellte Schiebebewegung durchgeführt hat, wobei die voreingestellte Schiebebewegung eine voreingestellte Schieberichtung und/oder das Schieben der Schiebeabdeckung (1802) in eine voreingestellte Position umfasst.

6. Verfahren nach einem vorstehenden Anspruch, wobei das Zielanwendungsprogramm ein Spiele-Anwendungsprogramm umfasst.

7. Vorrichtung zum Starten eines Anwendungsprogramms, wobei die Vorrichtung an einem Endgerät angewendet wird, das eine Schiebeabdeckung (1802) und einen Vorrichtungskörper (1804) umfasst, die verschiebbar miteinander verbunden sind, und wobei die Vorrichtung umfasst:
ein erstes Erkennungsmodul (21), das dazu ausgelegt ist: während eines laufenden Prozesses eines Zielanwendungsprogramms eine erste Bewegung der Schiebeabdeckung (1802) relativ zum Vorrichtungskörper (1804) zu erkennen und auf Basis der ersten Bewegung eine erste Schiebeinformation der Schiebeabdeckung (1802) zu erhalten, wenn eine voreingestellte Zielschnittstelle des Zielanwendungsprogramms angezeigt wird;
ein erstes Startmodul (22), das dazu ausgelegt ist, ein erstes Anwendungsprogramm zu starten, wenn die erste Schiebeinformation darauf hinweist, dass die Schiebeabdeckung (1802) eine voreingestellte Schiebebewegung durchführt;
ein erstes Anzeigemodul (23), das dazu ausgelegt ist, eine erste Zielinformation des ersten Anwendungsprogramms in einem Suspendierungsfenster, das in der voreingestellten Zielschnittstelle des Zielanwendungsprogramms eingeblendet wird, anzuzeigen;
ein zweites Erkennungsmodul (24), das dazu ausgelegt ist, eine zweite Bewegung der Schiebeabdeckung (1802) relativ zum Vorrichtungskörper (1804) zu erkennen und auf Basis der zweiten Bewegung eine zweite Schiebeinformation der Schiebeabdeckung (1802) zu erhalten;
ein Beendungsmodul (25), das dazu ausgelegt ist, das erste Anwendungsprogramm zu beenden, wenn die zweite Schiebeinformation darauf hinweist, dass die Schiebeabdeckung (1802) eine Schiebebewegung durchführt, die sich von der voreingestellten Schiebebewegung unterscheidet;
ein Ausgabemodul (26), das dazu ausgelegt ist, eine Abfrageinformation auszugeben, nachdem das erste Anwendungsprogramm beendet wurde, wobei die Abfrageinformation dazu dient, abzufragen, ob ein Benutzer ein zweites Anwendungsprogramm startet, und das zweite Anwendungsprogramm mit dem ersten Anwendungsprogramm verknüpft ist, und wobei das Endgerät Statistiken über historische Verwendungsinformationen jedes Anwendungsprogramms, das unmittelbar nach dem Beenden des ersten Anwendungsprogramms verwendet wird, durchführt, wenn die voreingestellte Zielschnittstelle des Zielanwendungsprogramms in einem historischen Zeitraum angezeigt wird, und ein Anwendungsprogramm mit den historischen Verwendungsinformationen, die eine voreingestellte Verwendungsbedingung erfüllen, als zweites Anwendungsprogramm nimmt;
ein zweites Startmodul (27), das dazu ausgelegt ist, das zweite Anwendungsprogramm zu starten, wenn vom Benutzer eine Anweisung empfangen wird, um das Starten des zweiten Anwendungsprogramms zu bestätigen; und
ein zweites Anzeigemodul (28), das dazu ausgelegt ist, eine zweite Zielinformation des zweiten Anwendungsprogramms anzuzeigen.

8. Vorrichtung nach Anspruch 7, wobei das erste Anzeigemodul umfasst:
ein Erhalte-Untermodul (231), das dazu ausgelegt ist, eine voreingestellte funktionale Schnittstelle des ersten Anwendungsprogramms zu erhalten, wobei die voreingestellte funktionale Schnittstelle die erste Zielinformation umfasst; und
ein Anzeige-Untermodul (232), das dazu ausgelegt ist, die voreingestellte funktionale Schnittstelle anzuzeigen.

9. Vorrichtung nach Anspruch 7 oder 8, wobei das Zielanwendungsprogramm ein Spiele-Anwendungsprogramm umfasst.

## Revendications

1. Procédé de démarrage d'un programme d'application, le procédé étant exécuté par un terminal comprenant un couvercle coulissant (1802) et un corps de dispositif (1804) connectés l'un à l'autre de manière coulissante, le procédé comprenant les étapes suivantes :
pendant un processus d'exécution d'un programme d'application cible, la détection d'un premier mouvement du couvercle coulissant (1802) par rapport au corps de dispositif (1804) ;
l'obtention d'une première information de coulissement du couvercle coulissant (1802) sur la base du premier mouvement lorsqu'une interface cible prédéfinie du programme d'application cible est affichée ;
le démarrage d'un premier programme d'application lorsque la première information de coulissement indique que le couvercle coulissant (1802) effectue un mouvement coulissant prédéfini ;
l'affichage d'une première information cible du premier programme d'application dans une fenêtre de suspension qui apparaît dans l'interface cible prédéfinie du programme d'application cible ;
la détection d'un second mouvement du couvercle coulissant (1802) par rapport au corps de dispositif (1804) ;
l'obtention d'une seconde information de coulissement du couvercle coulissant (1802) sur la base du second mouvement ;
la sortie du premier programme d'application lorsque la seconde information de coulissement indique que le couvercle coulissant (1802) effectue un mouvement coulissant différent du mouvement coulissant prédéfini ;
après la sortie du premier programme d'application, la délivrance en sortie d'une information de demande, dans lequel l'information de demande consiste à demander si un utilisateur démarre un second programme d'application, et le second programme d'application est associé au premier programme d'application, et dans lequel le terminal effectue des statistiques sur des informations d'usage historique de chaque programme d'application utilisé immédiatement après la sortie du premier programme d'application lorsque l'interface cible prédéfinie du programme d'application cible est affichée dans une période historique, et prend un programme d'application avec les informations d'usage historique satisfaisant une condition d'usage prédéfinie en tant que second programme d'application ;
le démarrage du second programme d'application lorsqu'une instruction provenant de l'utilisateur de confirmer le démarrage du second programme d'application est reçue ; et
l'affichage d'une seconde information cible du second programme d'application.

2. Procédé selon la revendication 1, dans lequel l'affichage de la première information cible du premier programme d'application comprend :
l'l'obtention d'une interface fonctionnelle prédéfinie du premier programme d'application, dans lequel l'interface fonctionnelle prédéfinie comprend la première information cible ; et
l'affichage de l'interface fonctionnelle prédéfinie.

3. Procédé selon une quelconque revendication précédente, comprenant en outre :
avant le démarrage du premier programme d'application, le criblage du premier programme d'application sur la base d'un mécanisme de criblage de programme d'application.

4. Procédé selon la revendication 3, dans lequel le criblage du premier programme d'application sur la base du mécanisme de criblage de programme d'application comprend l'une quelconque de :
l'obtention d'informations d'usage historique de programmes d'application associés exécutés conjointement avec le programme d'application cible dans une période historique prédéfinie, et la désignation d'un programme d'application associé aux informations d'usage historique de celui-ci satisfaisant une condition d'usage prédéfinie en tant que premier programme d'application ; ou
la désignation d'un programme d'application associé appartenant à un même développeur que le programme d'application cible en tant que premier programme d'application.

5. Procédé selon une quelconque revendication précédente, dans lequel le démarrage du premier programme d'application lorsque la première information de coulissement indique que le couvercle coulissant (1802) effectue le mouvement coulissant prédéfini, comprend l'un quelconque de :
lorsqu'un signal de détection correspondant à la première information de coulissement est un signal de détection prédéfini délivré en sortie par un capteur à effet Hall sur le terminal, le démarrage du premier programme d'application, dans lequel le signal de détection prédéfini est un signal de tension détecté par le capteur à effet Hall lorsque le couvercle coulissant (1802) est poussé dans une position prédéfinie ;
lorsqu'un signal de détection correspondant à la première information de coulissement est un signal de détection d'infrarouges prédéfini délivré en sortie par un capteur infrarouge sur le terminal, le démarrage du premier programme d'application, dans lequel le signal de détection d'infrarouges prédéfini est un signal de détection d'infrarouges détecté par le capteur infrarouge lorsqu'une marque sur le couvercle coulissant (1802) passe par le capteur infrarouge ; ou
lorsqu'un signal de détection correspondant à la première information de coulissement est détecté par un capteur de distance sur le terminal et qu'il est déterminé que le couvercle coulissant (1802) a effectué le mouvement coulissant prédéfini sur la base du signal de détection, le démarrage du premier programme d'application, dans lequel le mouvement coulissant prédéfini comprend une direction de coulissement prédéfinie et/ou le coulissement du couvercle coulissant (1802) jusqu'à une position prédéfinie.

6. Procédé selon une quelconque revendication précédente, dans lequel le programme d'application cible comprend un programme d'application de jeu.

7. Dispositif de démarrage d'un programme d'application, le dispositif étant appliqué à un terminal comprenant un couvercle coulissant (1802) et un corps de dispositif (1804) connectés l'un à l'autre de manière coulissante, et le dispositif comprenant :
un premier module de détection (21), configuré pour : pendant un processus d'exécution d'un programme d'application cible, détecter un premier mouvement du couvercle coulissant (1802) par rapport au corps de dispositif (1804), et obtenir une première information de coulissement du couvercle coulissant (1802) sur la base du premier mouvement lorsqu'une interface cible prédéfinie du programme d'application cible est affichée ;
un premier module de démarrage (22), configuré pour démarrer un premier programme d'application lorsque la première information de coulissement indique que le couvercle coulissant (1802) effectue un mouvement coulissant prédéfini ;
un premier module d'affichage (23), configuré pour afficher une première information cible du premier programme d'application dans une fenêtre de suspension qui apparaît dans l'interface cible prédéfinie du programme d'application cible ;
un second module de détection (24), configuré pour détecter un second mouvement du couvercle coulissant (1802) par rapport au corps de dispositif (1804), et obtenir une seconde information de coulissement du couvercle coulissant (1802) sur la base du second mouvement ;
un module de sortie (25), configuré pour sortir du premier programme d'application lorsque la seconde information de coulissement indique que le couvercle coulissant (1802) effectue un mouvement coulissant différent du mouvement coulissant prédéfini ;
un module de délivrance en sortie (26), configuré pour délivrer en sortie une information de demande après la sortie du premier programme d'application, dans lequel l'information de demande consiste à demander si un utilisateur démarre un second programme d'application, et le second programme d'application est associé au premier programme d'application, et dans lequel le terminal effectue des statistiques sur des informations d'usage historique de chaque programme d'application utilisé immédiatement après la sortie du premier programme d'application lorsque l'interface cible prédéfinie du programme d'application cible est affichée dans une période historique, et prend un programme d'application avec les informations d'usage historique satisfaisant une condition d'usage prédéfinie en tant que second programme d'application ;
un second module de démarrage (27), configuré pour démarrer le second programme d'application lorsqu'une instruction provenant de l'utilisateur de confirmer le démarrage du second programme d'application est reçue ; et
un second module d'affichage (28), configuré pour afficher une seconde information cible du second programme d'application.

8. Dispositif selon la revendication 7, dans lequel le premier module d'affichage comprend :
un sous-module d'obtention (231), configuré pour obtenir une interface fonctionnelle prédéfinie du premier programme d'application, dans lequel l'interface fonctionnelle prédéfinie comprend la première information cible ; et
un sous-module d'affichage (232), configuré pour afficher l'interface fonctionnelle prédéfinie.

9. Dispositif selon la revendication 7 ou 8, dans lequel le programme d'application cible comprend un programme d'application de jeu.
